# EUROPÄISCHE PATENTSCHRIFT

(11) **EP 3 994 533 B1**
(45) Veröffentlichungstag und Bekanntmachung des Hinweises auf die Patenterteilung: **25.10.2023**
(21) Anmeldenummer: 20780958.3
(22) Anmeldetag: 15.09.2020
(51) Int. Cl.: G05B 19/042, G06F 21/12

(54) **VOM MASCHINENHERSTELLER PARAMETRIERBARE NUMERISCHE STEUERUNG**
NUMERICAL CONTROLLER WHICH CAN BE ADJUSTED BY THE MACHINE MANUFACTURER
COMMANDE NUMÉRIQUE POUVANT ÊTRE PARAMÉTRÉE PAR LE FABRICANT DE MACHINES

(30) Priorität: 27.09.2019 EP 19200125
(43) Veröffentlichungstag der Anmeldung: 11.05.2022
(73) Patentinhaber: Siemens Aktiengesellschaft, 80333 München (DE)
(72) Erfinder: BRETSCHNEIDER, Jochen, 88696 Owingen (DE); MIHATSCH, Steffen, 71272 Renningen (DE)
(74) Vertreter: Siemens Patent Attorneys
(86) Internationale Anmeldenummer: PCT/EP2020/075758
(87) Internationale Veröffentlichungsnummer: WO 2021/058333

(56) Entgegenhaltungen:
- EP-A1- 3 045 993
- EP-A1- 3 543 811
- US-A1- 2006 064 385

## Beschreibung

Die vorliegende Erfindung geht aus von einem Betriebsverfahren für eine numerische Steuerung,
- wobei die numerische Steuerung ein Systemprogramm abarbeitet,
- wobei die numerische Steuerung unter Abarbeitung des Systemprogramms ein Teileprogramm abarbeitet und aufgrund der Abarbeitung des Teileprogramms lagegeregelte Achsen einer von der numerischen Steuerung gesteuerten Werkzeugmaschine ansteuert,
- wobei das Teileprogramm Befehlssätze aufweist, die von der numerischen Steuerung sequenziell nacheinander aufgerufen werden,
   wobei die Befehlssätze (10) Funktionen umfassen, die speziell für die numerische Steuerung (4) vorhanden sind,
- wobei die numerische Steuerung die aufgerufenen Funktionen nur dann abarbeitet, wenn die Funktionen zugelassene Randbedingungen einhalten, und anderenfalls die Funktionen nicht abarbeitet,
- wobei die numerische Steuerung vor der Abarbeitung des Teileprogramms unter Abarbeitung des Systemprogramms über eine vor unbefugtem Zugriff geschützte Schnittstelle Informationen entgegennimmt, welche die zugelassenen Randbedingungen festlegen.

Die vorliegende Erfindung geht weiterhin aus von einem Systemprogramm für eine numerische Steuerung, wobei das Systemprogramm Maschinencode umfasst, der von der numerischen Steuerung abarbeitbar ist, wobei die Abarbeitung des Maschinencodes durch die numerische Steuerung bewirkt, dass die numerische Steuerung ein derartiges Betriebsverfahren ausführt.

Die vorliegende Erfindung geht weiterhin aus von einer numerischen Steuerung, wobei die numerische Steuerung mit einem derartigen Systemprogramm programmiert ist, so dass die numerische Steuerung ein derartiges Betriebsverfahren ausführt.

Die vorliegende Erfindung geht weiterhin aus von einer Werkzeugmaschine,
- wobei die Werkzeugmaschine mehrere lagegeregelte Achsen aufweist, mittels derer ein Werkzeug der Werkzeugmaschine relativ zu einem zu bearbeitenden Werkstück verfahrbar ist,
- wobei die Werkzeugmaschine eine derartige numerische Steuerung aufweist, von der die lagegeregelten Achsen angesteuert werden.

Numerische Steuerungen, die zugehörigen Werkzeugmaschinen und die Betriebsweisen für numerische Steuerungen und Werkzeugmaschinen sind allgemein bekannt.

Beim Herstellen einer Werkzeugmaschine fertigt der Hersteller der Werkzeugmaschine die Werkzeugmaschine zum einen in konstruktiver Hinsicht, also beispielsweise eine Drehmaschine oder eine Fräsmaschine. Weiterhin legt der Hersteller im Rahmen der konstruktiven Auslegung der Werkzeugmaschine fest, wie viele und welche lagegeregelten Achsen die Werkzeugmaschine aufweist. Beispielsweise kann der Hersteller eine Fräsmaschine mit drei lagegeregelten Achsen herstellen, mittels derer ein Werkzeug der Werkzeugmaschine relativ zu einem bearbeitenden Werkstück im dreidimensionalen Raum zwar translatorisch positioniert, nicht aber rotatorisch orientiert werden kann. Alternativ kann der Hersteller beispielsweise eine Fräsmaschine mit vier oder fünf lagegeregelten Achsen herstellen, mittels derer das Werkzeug relativ zu dem Werkstück zusätzlich zur translatorischen Positionierung in drei Dimensionen auch in einer oder zwei Orientierungen rotatorisch orientiert werden kann. Auch andere Ausgestaltungen der Werkzeugmaschine sind möglich, beispielsweise auch Werkzeugmaschinen mit mehr als zwei Rundachsen.

Zum Steuern der von ihm gefertigten Werkzeugmaschine verwendet der Hersteller der Werkzeugmaschine eine numerische Steuerung. Die numerische Steuerung ist üblicherweise universell einsetzbar, also unabhängig davon, ob die Werkzeugmaschine eine Drehmaschine, eine Fräsmaschine oder eine andersartige Werkzeugmaschine ist. Die numerische Steuerung weist also in der Regel die Fähigkeit auf, jede der genannten Werkzeugmaschinen (und auch andere Werkzeugmaschinen) geeignet zu steuern. Für die Werkzeugmaschine, bei der die numerische Steuerung konkret eingesetzt wird, also beispielsweise eine Fräsmaschine mit drei lagegeregelten Achsen, sind jedoch nicht alle Funktionen, die von der numerischen Steuerung geboten werden, sinnvoll oder überhaupt nutzbar. Manche Funktionen und insbesondere manche Kombinationen von Funktionen können sogar schädlich sein. Im Ergebnis sind sehr viele Parameter der numerischen Steuerung einstellbar, wobei es von der konkreten Verwendung der numerischen Steuerung abhängt, welche Parameter sinnvoll sind. Mittels der Parameter kann beispielsweise festgelegt werden, ob eine bestimmte Funktion oder eine bestimmte Kombination von Funktionen aufgerufen bzw. ausgeführt werden kann oder nicht. Alternativ oder zusätzlich kann mittels der Parameter festgelegt werden, auf welche Art und Weise eine bestimmte Funktion oder eine bestimmte Kombination von Funktionen ausgeführt wird.

Um zu gewährleisten, dass nur "nützliche" Funktionen und dergleichen der numerischen Steuerung genutzt werden, wird in Handbüchern und dergleichen darauf hingewiesen, welche Funktionen sinnvoll sind und genutzt werden können und welche Bedingungen hierbei gegebenenfalls eingehalten werden müssen. Der Hersteller der Werkzeugmaschine vermeidet hierdurch sein Haftungsrisiko, da er im Handbuch oder in der Bedienungsanleitung explizit darauf hinweist, welche Funktionen genutzt werden dürfen und welche nicht. Hingegen wird nicht prinzipiell ausgeschlossen, dass Funktionen, die nicht genutzt werden können oder nicht sinnvoll genutzt werden können, von der numerischen Steuerung dennoch aufgerufen werden. Falls versehentlich derartige Funktionen dennoch aufgerufen werden, können also minderwertige Bearbeitungsvorgänge oder sogar Schäden an der Werkzeugmaschine oder am Werkstück die Folge sein.

Es ist weiterhin bekannt, gewisse Software-Optionen nachträglich zu aktivieren oder nachträglich in die numerische Steuerung zu integrieren. Diese Integration erfolgt durch den Endkunden, also den Käufer und Betreiber der Werkzeugmaschine. Der Hersteller der Werkzeugmaschine hat keine Kontrolle darüber, welche der Software-Optionen nachträglich aktiviert oder integriert werden und ob und gegebenenfalls auf welche Art und Weise sie genutzt werden. Er kann - wie zuvor erläutert - nur in Handbüchern und dergleichen darauf hinweisen, welche Funktionen sinnvoll sind und genutzt werden können und welche Bedingungen hierbei gegebenenfalls eingehalten werden müssen.

Aus der Druckschrift EP3543811A1 ist eine numerische Steuerung bekannt, die unter Kontrolle durch ein Systemprogramm ein Nutzprogramm ausführt. Die numerische Steuerung ermittelt im Rahmen der Ausführung des Nutzprogramms mittels mindestens einer Prozessoreinrichtung mit mindestens einer ersten Taktrate Sollwerte für lagegeregelte Achsen einer von der numerischen Steuerung gesteuerten Maschine und steuert die lagegeregelten Achsen entsprechend den jeweils ermittelten Sollwerten an. In der numerischen Steuerung ist für Ressourcen der numerischen Steuerung jeweils hinterlegt, ob und gegebenenfalls in welchem Umfang sie freigegeben sind oder ob sie gesperrt sind. Die numerische Steuerung ermittelt die Sollwerte für die lagegeregelten Achsen unter Nutzung ausschließlich der freigegebenen Ressourcen.

Aus der Druckschrift EP3045993A1 ist ein Fertigungssystem mit einer Fertigungsmaschine und einer Steuerungsvorrichtung zum Erzeugen spezifischer Steuerungsbefehle für die Fertigungsmaschine auf der Grundlage von Fertigungsdaten bekannt. Die Steuerungsvorrichtung besitzt eine Analyseeinrichtung, die dazu ausgebildet ist, anhand eines vorgegebenen Qualitätskriteriums zu entscheiden, ob eine in die Steuerungsvorrichtung bereits integrierte, aktivierte Funktionalität zur Übersetzung der Fertigungsdaten in die spezifischen Steuerungsbefehle verwendet wird oder eine alternative Funktionalität, die in einer Datenbank außerhalb der Steuerungsvorrichtung oder in nicht aktivierter Form in der Steuerungsvorrichtung bereitgestellt wird.

Aus der Druckschrift US2006/0064385A1 ist ein System zum Vertreiben von CNC-Programm-Lizenzen über das Internet bekannt. Über das Internet ist ein Host-Computer mit einer numerischen Computersteuerung verbunden, die eine CNC-Maschine steuert. In der Steuerung ist ein verschlüsseltes Programm gespeichert, für das eine Prepaid-Lizenz erforderlich ist, um das verschlüsselte Programm zuerst zu entschlüsseln, bevor die Ausführung des Programms durch die Steuerung ermöglicht wird.

Die Aufgabe der vorliegenden Erfindung besteht darin, Möglichkeiten zu schaffen, mittels derer der Hersteller der Werkzeugmaschine sicherstellen kann, dass von den Funktionen, welche die numerische Steuerung prinzipiell zur Verfügung stellt, nur diejenigen genutzt werden können, die bei der Werkzeugmaschine, bei der die numerische Steuerung konkret eingesetzt wird, sinnvoll sind.

Die Aufgabe wird durch ein Betriebsverfahren für eine numerische Steuerung mit den Merkmalen des Anspruchs 1 gelöst. Vorteilhafte Ausgestaltungen des Betriebsverfahrens sind Gegenstand der abhängigen Ansprüche 2 bis 8.

Erfindungsgemäß wird ein Betriebsverfahren der eingangs genannten Art dadurch ausgestaltet,
- dass die Befehlssätze Funktionen umfassen, die speziell für die numerische Steuerung (4) vorhanden sind,
- dass die numerische Steuerung die aufgerufenen Funktionen nur dann abarbeitet, wenn die Funktionen zugelassene Randbedingungen einhalten, und anderenfalls die Funktionen nicht abarbeitet,
- dass die Steuereinrichtung vor der Abarbeitung des Teileprogramms unter Abarbeitung des Systemprogramms über eine vor unbefugtem Zugriff geschützte Schnittstelle Informationen entgegennimmt, welche die zugelassenen Randbedingungen festlegen, und
- dass mittels mindestens einer der Randbedingungen für Kombinationen von Funktionen der numerischen Steuerung festgelegt wird, ob sie freigegeben oder gesperrt sind.

Dadurch ist es möglich, dass der Hersteller der Werkzeugmaschine - dem die Informationen für den Zugriff auf die geschützte Schnittstelle bekannt sind - die zugelassenen Randbedingungen festlegt, während der Endkunde und Betreiber der Werkzeugmaschine - dem diese Informationen nicht bekannt sind - die zugelassenen Randbedingungen hinnehmen muss, wie sie vom Hersteller der Werkzeugmaschine festgelegt wurden.

Eine derartige Festlegung ist auch für Funktionen möglich, die in der numerischen Steuerung in ihrem Grundzustand, also ohne Integration mindestens einer Software-Option, noch nicht vorhanden sind. Wenn beispielsweise die numerische Steuerung in ihrem Grundzustand die Funktionen A, B, C und D bietet und bekannt ist, dass mittels einer Software-Option zusätzlich die Funktionen E, F und G implementiert werden können, so kann der Hersteller der Werkzeugmaschine beispielsweise festlegen, dass die Funktionen A und B gesperrt sind und weiterhin auch die Funktionen F und G gesperrt sind. In einem derartigen Fall kann der Endkunde und Betreiber der Werkzeugmaschine ohne vorherige Integration der genannten Software-Option nur zwischen den Funktionen C und D wählen und nach einer Integration der genannten Software-Option nur zwischen den Funktionen C, D und E wählen. Im Ergebnis wird dem Hersteller der Werkzeugmaschine somit die Möglichkeit gegeben, die Fähigkeiten der numerischen Steuerung einzustellen. Es erfolgt also nicht eine mehr oder minder quantitative Einstellung der Leistungsfähigkeit der numerischen Steuerung, also wie schnell die numerische Steuerung bestimmte Aufgaben ausführt. Vielmehr erfolgt eine qualitative Einstellung der Leistungsfähigkeit der numerischen Steuerung, also ob sie bestimmte Aufgaben überhaupt ausführt oder nicht.

Eine der Randbedingungen legt fest, ob Kombinationen von Funktionen der numerischen Steuerung freigegeben oder gesperrt sind.

Weitere Randbedingungen können nach Bedarf bestimmt sein.

Beispielsweise kann oftmals mittels mindestens einer der Randbedingungen ein Wertebereich für eine Systemvariable der numerischen Steuerung festgelegt werden. In diesem Fall ist es möglich, dass die numerische Steuerung als Information einen Minimalwert und/oder einen Maximalwert für die Systemvariable entgegennimmt.

Weiterhin kann oftmals mittels mindestens einer der Randbedingungen ein Wertebereich für eine Korrektur von Abmessungen eines Werkzeugs der Werkzeugmaschine festgelegt werden. In diesem Fall ist es möglich, dass die numerische Steuerung als Information einen Minimalwert und/oder einen Maximalwert für die Korrektur der Abmessungen entgegennimmt.

Weiterhin kann oftmals mittels mindestens einer der Randbedingungen die Art und Weise festgelegt werden, auf welche beim Abfahren einer durch das Teileprogramm festgelegten Bahn eines Werkzeugs relativ zu einem mittels des Werkzeugs zu bearbeitenden Werkstück Ecken der Bahn verschliffen werden. In diesem Fall ist es möglich, dass die numerische Steuerung als Information entgegennimmt, auf welche Art und Weise die Ecken verschliffen werden.

Weiterhin kann oftmals mittels mindestens einer der Randbedingungen die Art und Weise festgelegt werden, auf welche aus einem CAD-Datensatz das Teileprogramm generiert wird. Alternativ oder zusätzlich kann mittels mindestens einer der Randbedingungen auch festgelegt werden, auf welche Art und Weise das CAM-generierte Teileprogramm verarbeitet wird, beispielsweise komprimiert wird. In diesem Fall ist es möglich, dass die numerische Steuerung als Information entgegennimmt, auf welche Art und Weise das Teileprogramm generiert und/oder verarbeitet wird.

Weiterhin kann oftmals mittels der Befehlssätze des Teileprogramms sowohl die translatorische Position als auch die rotatorische Orientierung eines Werkzeugs der Werkzeugmaschine relativ zu einem zu bearbeitenden Werkstück festgelegt werden. In diesem Fall kann oftmals mittels mindestens einer der Randbedingungen die Art und Weise festgelegt werden, wie bei einer kombinierten Änderung von translatorischer Position und rotatorischer Orientierung die Änderungen der translatorischen Position und der rotatorischen Orientierung aufeinander abgestimmt werden. In diesem Fall ist es möglich, dass die numerische Steuerung als Information entgegennimmt, auf welche Art und Weise die Änderungen der translatorischen Position und der rotatorischen Orientierung aufeinander abgestimmt werden.

Weiterhin kann oftmals mittels mindestens einer der Randbedingungen ein Ansteuern mindestens einer der lagegeregelten Achsen der Werkzeugmaschine in Abhängigkeit vom Betriebszustand der Werkzeugmaschine dynamisch gesperrt oder beschränkt werden. In diesem Fall ist es möglich, dass die numerische Steuerung als Information entgegennimmt, bei welchen Betriebszuständen der Werkzeugmaschine das Ansteuern der mindestens einen der lagegeregelten Achsen der Werkzeugmaschine gesperrt oder beschränkt wird.

Weiterhin kann oftmals mittels mindestens einer der Randbedingungen festgelegt werden, auf welche Art und Weise eine Kompensation von Abweichungen bei der Positionierung und/oder Orientierung eines Werkzeugs der Werkzeugmaschine relativ zu einem zu bearbeitenden Werkstück erfolgt. In diesem Fall ist es möglich, dass die numerische Steuerung als Information die Art und Weise der Kompensation entgegennimmt. Die Art und Weise der Kompensation kann nach Bedarf den funktionalen Verlauf und/oder Grenzen der Kompensation festlegen.

Die Aufgabe wird weiterhin durch ein Systemprogramm mit den Merkmalen des Anspruchs 9 gelöst. Erfindungsgemäß wird ein Systemprogramm der eingangs genannten Art derart ausgestaltet, dass die Abarbeitung des Maschinencodes durch die numerische Steuerung bewirkt, dass die numerische Steuerung ein erfindungsgemäßes Betriebsverfahren ausführt.

Die Aufgabe wird weiterhin durch eine numerische Steuerung mit den Merkmalen des Anspruchs 10 gelöst. Erfindungsgemäß wird eine numerische Steuerung der eingangs genannten Art mit einem erfindungsgemäßen Systemprogramm programmiert, so dass die numerische Steuerung ein erfindungsgemäßes Betriebsverfahren ausführt.

Die Aufgabe wird weiterhin durch eine Werkzeugmaschine mit den Merkmalen des Anspruchs 11 gelöst. Erfindungsgemäß ist die numerische Steuerung einer Werkzeugmaschine der eingangs genannten Art erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine,
- FIG 2: ein Ablaufdiagramm,
- FIG 3: einen Fahrbereich,
- FIG 4: einen Schritt des Ablaufdiagramms von FIG 2,
- FIG 5: ein Werkzeug,
- FIG 6: einen Schritt des Ablaufdiagramms von FIG 2,
- FIG 7: eine Bahn,
- FIG 8: einen Schritt des Ablaufdiagramms von FIG 2,
- FIG 9: das Erstellen des Teileprogramms,
- FIG 10: einen Schritt des Ablaufdiagramms von FIG 2,
- FIG 11: ein Positions-Orientierungsdiagramm,
- FIG 12: einen Schritt des Ablaufdiagramms von FIG 2,
- FIG 13: eine gegenüber FIG 1 modifizierte Werkzeugmaschine,
- FIG 14: einen Schritt des Ablaufdiagramms von FIG 2,
- FIG 15: ein Positions-Orientierungsdiagramm,
- FIG 16: einen Schritt des Ablaufdiagramms von FIG 2 und
- FIG 17: einen Schritt des Ablaufdiagramms von FIG 2.

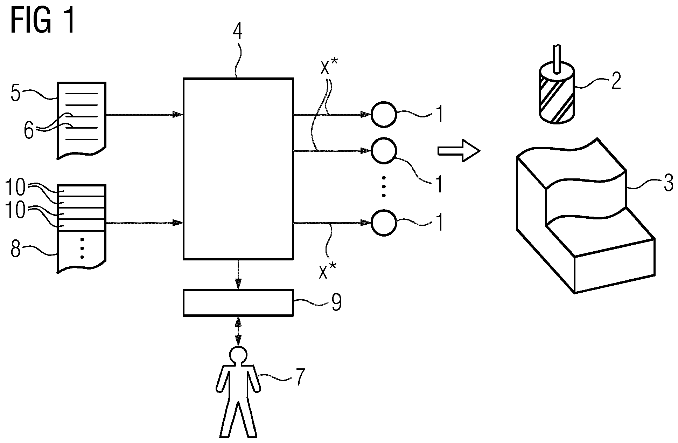

Gemäß FIG 1 weist eine Werkzeugmaschine mehrere lagegeregelte Achsen 1 auf. Mittels der lagegeregelten Achsen 1 wird ein Werkzeug 2 der Werkzeugmaschine relativ zu einem Werkstück 3 verfahren. Durch das Verfahren des Werkzeugs 2 wird das Werkstück 3 bearbeitet. Das Verfahren erfolgt lagegeregelt. Die Anzahl an lagegeregelten Achsen 1 kann nach Bedarf sein. Oftmals sind drei bis acht lagegeregelte Achsen 1 vorhanden.

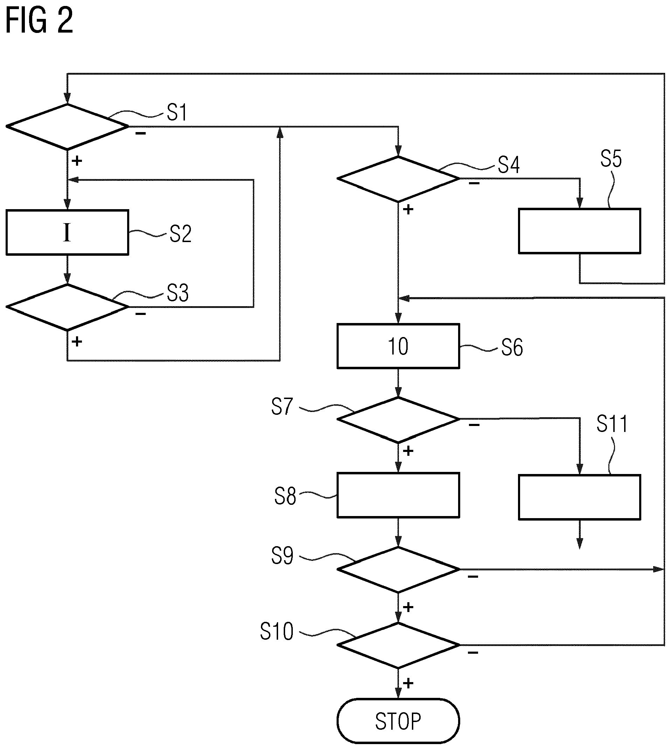

Die Werkzeugmaschine weist weiterhin eine numerische Steuerung 4 auf. Mittels der numerischen Steuerung 4 werden die lagegeregelten Achsen 1 angesteuert und dadurch das Werkzeug 2 relativ zu dem Werkstück 3 verfahren. Die numerische Steuerung 4 ist mit einem Systemprogramm 5 programmiert. Das Systemprogramm 5 umfasst Maschinencode 6, der von der numerischen Steuerung 4 abarbeitbar ist. Aufgrund der Programmierung der numerischen Steuerung 4 mit dem Systemprogramm 5 arbeitet die numerische Steuerung 4 den Maschinencode 6 ab. Die Abarbeitung des Maschinencodes 6 durch die numerische Steuerung 4 bewirkt, dass die numerische Steuerung 4 ein Betriebsverfahren ausführt, das nachstehend in Verbindung mit FIG 2 näher erläutert wird. Die numerische Steuerung 4 führt das nachstehend erläuterte Betriebsverfahren also unter Abarbeitung des Systemprogramms 5 aus.

Gemäß FIG 2 prüft die numerische Steuerung 4 im Rahmen der Abarbeitung des Systemprogramms 5 zunächst in einem Schritt S1, ob sie sich in einem Parametriermodus befindet. Insbesondere prüft die numerische Steuerung im Schritt S1, ob ihr von einer Bedienperson 7 eine Zugriffsberechtigung vorgegeben wird, beispielsweise eine Kombination von Benutzername und Passwort. Nur bei Vorgabe der Zugriffsberechtigung geht die numerische Steuerung 4 zu einem Schritt S2 und damit in den Parametriermodus über.

Im Schritt S2 nimmt die numerische Steuerung 4 von der Bedienperson 7 Informationen I entgegen. Die Informationen I legen fest, welche Randbedingungen für die spätere Ausführung eines Teileprogramms 8 zugelassen sind. Mögliche Randbedingungen werden später noch näher erläutert werden.

Die Informationen I werden der numerischen Steuerung 4 von der Bedienperson 7 über eine Schnittstelle 9 vorgegeben. Aufgrund des Umstands, dass die numerische Steuerung 4 den Schritt S2 nur dann ausführt, wenn ihr zuvor im Schritt S1 die Zugriffsberechtigung vorgegeben wird, handelt es sich bei der Schnittstelle 9 somit um eine Schnittstelle, die vor unbefugtem Zugriff geschützt ist.

In einem Schritt S3 prüft die numerische Steuerung 4, ob sie den Parametriermodus verlassen soll, beispielsweise aufgrund eines Logout-Befehls der Bedienperson 7. Je nach Ergebnis der Prüfung des Schrittes S3 geht die numerische Steuerung 4 zum Schritt S2 zurück oder zu einem Schritt S4 über.

Wenn der numerischen Steuerung 4 im Schritt S1 die Zugriffsberechtigung nicht vorgegeben wird, geht die numerische Steuerung 4 direkt zum Schritt S4 über. Im Schritt S4 prüft die numerische Steuerung 4, ob ihr von der Bedienperson 7 ein Startbefehl zur Abarbeitung des Teileprogramms 8 vorgegeben wird. Wenn dies nicht der Fall ist, geht die numerische Steuerung 4 über einen Schritt S5 zum Schritt S1 zurück. Im Schritt S5 können Handlungen vorgenommen werden, die nicht direkt mit der Abarbeitung des Teileprogramms 8 und auch nicht direkt mit der Vorgabe der Randbedingungen verbunden sind. Sofern der numerischen Steuerung 4 der Startbefehl vorgegeben wird, geht die numerische Steuerung 4 hingegen zu einem Schritt S6 über.

Das Teileprogramm 8 weist entsprechend der Darstellung in FIG 1 Befehlssätze 10 auf. Die Befehlssätze 10 umfassen in der Regel genormte G-Codes und gegebenenfalls zusätzlich auch Befehle (Funktionen), die speziell für die numerische Steuerung 4 vorhanden sind. Weiterhin können sowohl die G-Codes als auch die speziellen Funktionen Einstellparameter umfassen, welche ihr Verhalten beeinflussen. Die Befehlssätze 10 werden von der numerischen Steuerung 4 sequenziell nacheinander aufgerufen und - zumindest in der Regel - abgearbeitet. Konkret ruft die numerische Steuerung 4 bei der erstmaligen Abarbeitung des Schrittes S6 den ersten Befehlssatz ab. Sodann prüft sie in einem Schritt S7, ob der aufgerufene Befehlssatz 10 die zugelassenen Randbedingungen erfüllt. Wenn dies der Fall ist, geht die numerische Steuerung 4 zu einem Schritt S8 über, in dem die numerische Steuerung 4 den aufgerufenen Befehlssatz 10 ausführt. Die Abarbeitung des Schrittes S8 kann insbesondere mit der Ansteuerung der lagegeregelten Achsen 1 verbunden sein.

In einem Schritt S9 prüft die numerische Steuerung 4, ob sie das Teileprogramm 8 vollständig abgearbeitet hat, also alle Befehlssätze 10 des Teileprogramms 8 aufgerufen hat. Wenn dies nicht der Fall ist, geht die numerische Steuerung 4 zum Schritt S6 zurück. Bei der erneuten Abarbeitung des Schrittes S6 ruft die numerische Steuerung 4 nunmehr den nächsten Befehlssatz 10 auf und arbeitet ihn ab. Wenn die numerische Steuerung 4 im Schritt S9 feststellt, dass sie das Teileprogramm 8 vollständig abgearbeitet hat, geht die numerische Steuerung 4 zu einem Schritt S10 über. Im Schritt S10 prüft die numerische Steuerung 4, ob die Ausführung des Teileprogramms 8 beendet werden soll, beispielsweise weil ihr ein Stoppbefehl vorgegeben wurde oder weil sie das Teileprogramm 8 nur einmal ausführen sollte. Wenn die Ausführung des Teileprogramms 8 nicht beendet werden soll, geht die numerische Steuerung 4 zum Schritt S6 zurück. Bei dieser Abarbeitung des Schrittes S6 ruft die numerische Steuerung 4 wieder den ersten Befehlssatz 10 des Teileprogramms 8 auf und arbeitet ihn ab.

Diese Schrittfolge wird ausgeführt, wenn die numerische Steuerung 4 bei der Prüfung des Schrittes S7 jeweils feststellt, dass die zugelassenen Randbedingungen erfüllt sind. Sobald dies hingegen nicht der Fall ist, geht die numerische Steuerung 4 zu einem Schritt S11 über. Im Schritt S11 wird eine andere Reaktion als die Ausführung des aufgerufenen Befehlssatzes 10 ergriffen. Insbesondere wird damit der aufgerufene Befehlssatz 10 nicht ausgeführt.

Die Reaktion des Schrittes S11 kann nach Bedarf sein. In manchen Fällen ist es möglich, dass nur der Befehlssatz 10 selbst nicht ausgeführt wird und zum Schritt S6 zurückgegangen wird. In anderen Fällen kann es sinnvoll oder erforderlich sein, eine entsprechende Meldung an die Bedienperson 7 auszugeben und/oder die weitere Abarbeitung des Teileprogramms 8 zu beenden. Welche dieser Maßnahmen ergriffen wird, hängt von den Umständen des Einzelfalls ab. In jedem Fall aber wird der Befehlssatz 10, der die Prüfung des Schrittes S7 nicht besteht, nicht abgearbeitet.

Nachfolgend werden einige der Randbedingungen, die im Schritt S2 zugelassen werden können und deren Einhaltung im Schritt S7 geprüft wird, erläutert.

Die meisten Befehlssätze 10 sind einfache Fahrbefehle ("positioniere das Werkzeug 2 relativ zum Werkstück 3 an der Position p" oder "positioniere das Werkzeug 2 relativ zum Werkstück 3 an der Position p und orientiere gleichzeitig das Werkzeug 2 relativ zum Werkstück 3 unter der Orientierung o"). In diesem Fall legt der jeweilige Befehlssatz 10 direkt oder indirekt für die lagegeregelten Achsen 1 für die translatorische Bewegung des Werkzeugs 2 relativ zum Werkstück 3 eine Abfolge von Lagesollwerten x* fest, die sich von der momentanen Position p, an der sich das Werkzeug 2 relativ zum Werkstück 3 befindet, bis zu der durch den Befehlssatz 10 festgelegten Position p des Werkzeugs 2 relativ zum Werkstück 3 erstreckt. Ein analoger Sachverhalt gilt für die Orientierung o des Werkzeugs 2 relativ zum Werkstück 3.

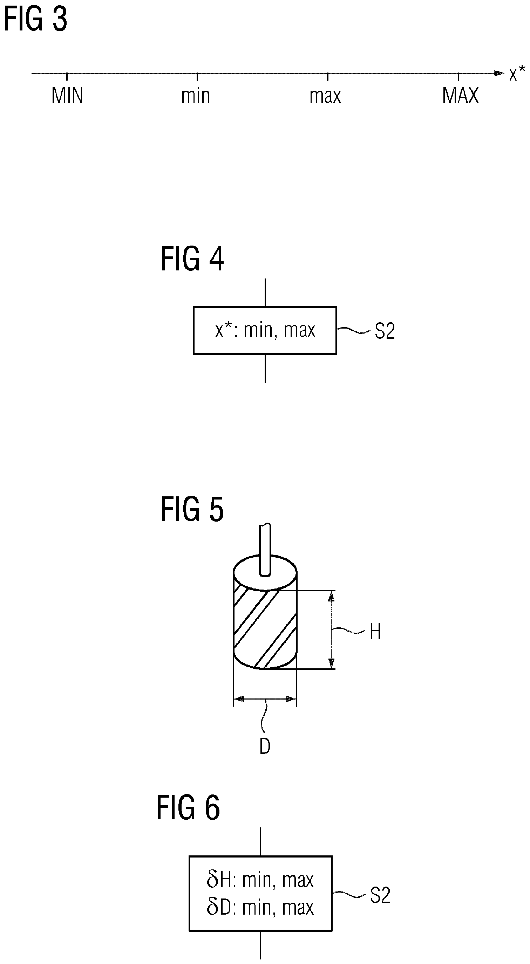

Soweit es die numerische Steuerung 4 betrifft, müssen die Lagesollwerte x* einer bestimmten lagegeregelten Achse 1 entsprechend der Darstellung in FIG 3 zwischen einem theoretischen Minimalwert MIN und einem theoretischen Maximalwert MAX liegen. Der Bereich zwischen dem theoretischen Minimalwert MIN und dem theoretischen Maximalwert MAX stellt einen theoretischen Fahrbereich dar. Der theoretische Minimalwert MIN und der theoretische Maximalwert MAX können gegebenenfalls sehr klein bzw. sehr groß sein. Im Rahmen der konkreten Werkzeugmaschine kann oder darf die lagegeregelte Achse 1 aber beispielsweise nur zwischen einem tatsächlichen Minimalwert min und einem tatsächlichen Maximalwert max verfahren werden, insbesondere aufgrund einer entsprechenden Dimensionierung und Auslegung der Werkzeugmaschine. Anderenfalls droht beispielsweise eine Kollision oder wird ein Anschlag angefahren. Der Bereich zwischen dem tatsächlichen Minimalwert min und dem tatsächlichen Maximalwert max stellt einen tatsächlichen Fahrbereich dar. Im Schritt S2 können der numerischen Steuerung 4 von der Bedienperson 7 beispielsweise entsprechend der Darstellung in FIG 4 für die entsprechende lagegeregelte Achse 1 der tatsächliche Minimalwert min und/oder der tatsächliche Maximalwert max vorgegeben werden. Die entsprechende Vorgabe kann natürlich für jede lagegeregelte Achse 1 individuell möglich sein. Analoge Vorgaben sind auch für andere Systemvariablen der numerischen Steuerung 4 möglich. Beispiele derartiger Systemvariablen sind Nullpunktverschiebungen und Offsets. Nullpunktverschiebungen und Offsets können beispielsweise auftreten, wenn das Werkstück 3 leicht versetzt in einer Aufspannung des Werkstücks 3 eingespannt wird. Die Nullpunktverschiebung als solche ist in diesem Fall in der Regel von der tatsächlichen Aufspannung des Werkstücks 3 abhängig.

Mittels anderer der Befehlssätze 10 kann beispielsweise ein bestimmtes Werkzeug 2 ausgewählt werden. In diesem Fall wird zum einen aus einem Werkzeugmagazin (nicht dargestellt) das entsprechende Werkzeug 2 entnommen. Das Werkzeug 2 weist entsprechend der Darstellung in FIG 5 bestimmte Abmessungen D, H auf, beispielsweise bei dem in FIG 5 dargestellten Fräser einen Durchmesser D und eine Höhe H. Die entsprechenden Werte sind in der Regel in der numerischen Steuerung 4 hinterlegt.

Im Laufe des Betriebs des Werkzeugs 2 können sich die Abmessungen D, H - insbesondere durch Verschleiß - geringfügig ändern. Auch ist es möglich, dass von vorneherein ein Werkzeug 2 verwendet wird, das geringfügig andere Abmessungen D, H aufweist als ein ursprünglich geplantes Werkzeug 2. Um dennoch eine genaue Bearbeitung des Werkstücks 3 vornehmen zu können, ist es daher üblich, der numerischen Steuerung Korrekturwerte δD, δH für die Abmessungen D, H des Werkzeugs 2 vorgeben zu können. Auch für die Korrekturwerte δD, δH können entsprechend der Darstellung in FIG 6 im Schritt S2 ein Minimalwert und/oder ein Maximalwert vorgegeben werden.

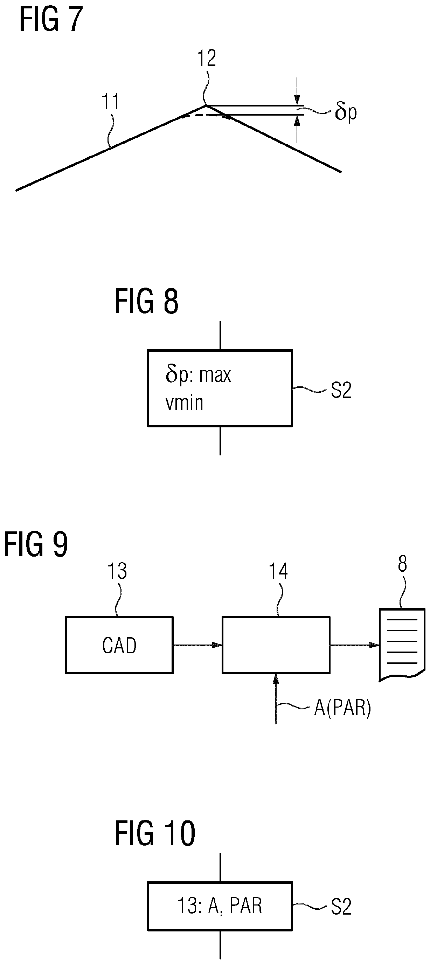

Aufgrund der Abfolge der Befehlssätze 10 des Teileprogramms 8 wird das Werkzeug 2 relativ zum Werkstück 3 entsprechend der Darstellung in FIG 7 entlang einer durch das Teileprogramm 8 festgelegten Bahn 11 verfahren. Die Bahn 11 kann an bestimmten Stellen eine Ecke 12 aufweisen. Sofern die Ecke 12 exakt angefahren werden soll, muss die Geschwindigkeit, mit der die Bahn 11 abgefahren wird, in der Ecke 12 auf 0 reduziert werden. Erst danach kann das Werkzeug 2 relativ zum Werkstück 3 wieder beschleunigt werden. Aus Bearbeitungsgründen sollte die Geschwindigkeit jedoch oberhalb eines Minimalwertes vmin bleiben. Dadurch wird die Bahn 11 im Bereich der Ecke 12 geringfügig verschliffen. Dies ist in FIG 7 gestrichelt angedeutet. Durch das Verschleifen ergibt sich ein gewisser Positionierungsfehler δp. Die Größe des Positionierungsfehlers δp hängt beispielsweise davon ab, gemäß welchem Algorithmus die Lagesollwerte x* für die verschiedenen Achsen 1 ermittelt werden und auf welchen Wert vmin die Geschwindigkeit das Werkzeug 2 beim Abfahren der Bahn 11 im Bereich der Ecke 12 reduziert wird. Diese und andere Größen legen die Art und Weise fest, auf welche die Ecke 12 verschliffen wird. Derartige Werte - also der maximal zulässige Positionierungsfehler δp und/oder die minimal einzuhaltende Geschwindigkeit vmin des Werkzeugs 2 - können entsprechend der Darstellung in FIG 8 im Schritt S2 vorgegeben werden. Sie legen damit im Ergebnis fest, auf welche Art und Weise die Ecke 12 (und auch andere Ecken 12) verschliffen werden.

Entsprechend der Darstellung in FIG 9 wird das Teileprogramm 8 mittels eines CAM-Systems 14 anhand eines CAD-Datensatzes 13 erstellt. Das CAM-System 14 erstellt das Teileprogramm 8 anhand eines bestimmten Algorithmus A. Hierbei sind sowohl verschiedene Algorithmen A möglich als auch können die Algorithmen A ihrerseits durch Vorgabe entsprechender Parameter PAR parametriert werden. Entsprechend der Darstellung in FIG 10 ist es möglich, im Schritt S2 den gewünschten Algorithmus A und die zugehörigen Parameter PAR vorzugeben. Durch entsprechenden Datenaustausch zwischen der numerischen Steuerung 4 und dem CAM-System 14 ist es daher möglich, zu gewährleisten, dass bei der Erstellung des Teileprogramms 8 der gewünschte Algorithmus A und die zugehörigen Parameter PAR verwendet werden. Im Ergebnis wird somit die Art und Weise festgelegt, auf welche aus einem CAD-Datensatzes 13 das Teileprogramm 8 generiert wird. Völlig analoge Vorgehensweisen sind bezüglich der Art und Weise möglich, auf welche das generierte Teileprogramm 8 verarbeitet wird, insbesondere in der numerischen Steuerung 4 selbst.

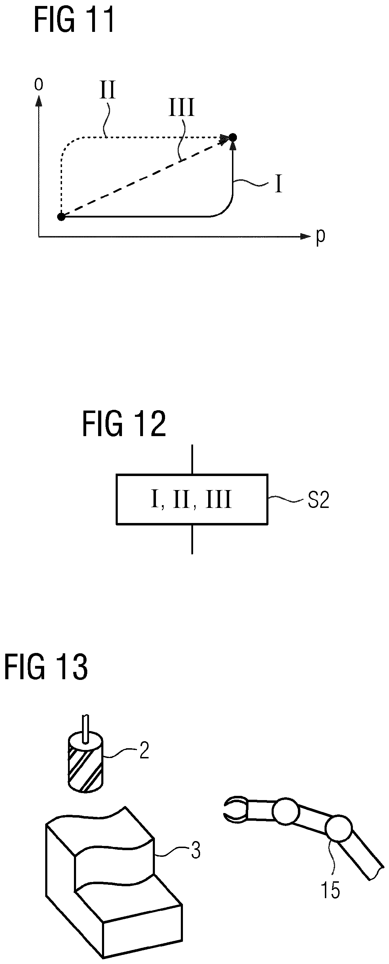

Wie eingangs erwähnt, kann bei manchen Werkzeugmaschinen nicht nur die translatorische Position p, sondern auch die rotatorische Orientierung o des Werkzeugs 2 relativ zum Werkstück 3 festgelegt werden. Es ist daher entsprechend der Darstellung in FIG 11 möglich, dass von einem Befehlssatz 10 zum nächsten Befehlssatz 10 sich sowohl die translatorische Position p als auch die rotatorische Orientierung o ändern. Damit ist aber noch nicht die Art und Weise festgelegt, auf welche die translatorische Position p und die rotatorische Orientierung o geändert werden. Beispielsweise ist es alternativ möglich, die Änderungen gemäß einem Typ I, einem Typ II oder einem Typ III vorzunehmen. Beim Typ I wird zuerst die neue Position p angefahren und erst danach die Orientierung o geändert. Beim Typ II ist es umgekehrt. Beim Typ III erfolgt zusammen mit dem Ändern der Position p ein gleichmäßiges Ändern der Orientierung o. Auch andere Typen sind denkbar und möglich. Entsprechend der Darstellung in FIG 12 kann es beispielsweise möglich sein, im Schritt S2 den entsprechenden Typ I bis III (oder auch einen anderen Typ) vorzugeben. Es ist also möglich, im Schritt S2 festzulegen, auf welche Art und Weise die Änderungen der translatorischen Position p und der rotatorischen Orientierung o aufeinander abgestimmt werden. Der guten Ordnung halber sei erwähnt, dass im Zusammenhang mit den FIG 11 und 12 die translatorische Position p und die rotatorische Orientierung o Vektoren sein können. Beispielsweise kann die translatorische Position p für die drei Koordinaten eines kartesischen Koordinatensystems je einen eigenen Wert aufweisen. Ähnliches gilt für die rotatorische Orientierung o.

FIG 13 zeigt rein beispielhaft eine Ausgestaltung, bei welcher zusätzlich zu dem Werkzeug 2 noch ein weiteres Element 15 vorhanden ist. Das weitere Element 15 kann unabhängig von dem Werkzeug 2 relativ zum Werkstück 3 verfahren werden. Das weitere Element 15 kann beispielsweise entsprechend der schematischen Darstellung in FIG 13 ein Roboterarm sein. Es sind aber auch andere Ausgestaltungen möglich.

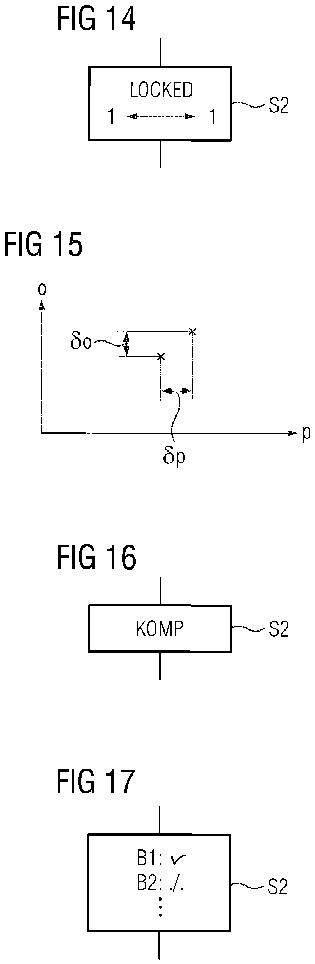

Um Kollisionen zu vermeiden, kann beispielsweise gefordert sein, dass das weitere Element 15 nur dann verfahren werden darf, wenn das Werkzeug 2 und/oder das Werkstück 3 nicht verfahren werden. Gegebenenfalls kann auch die umgekehrte Forderung bestehen. In diesem Fall kann entsprechend der Darstellung in FIG 14 im Schritt S2 beispielsweise vorgegeben werden, dass die Lagesollwerte x* für diejenigen lagegeregelten Achsen 1, mittels derer das weitere Element 15 verfahren wird, nicht geändert werden dürfen, während die Lagesollwerte x* für diejenigen lagegeregelten Achsen 1, mittels derer das Werkzeug 2 und/oder das Werkstück 3 verfahren werden, sich ändern und umgekehrt. Die Bewegungen sind in diesem Fall also gegeneinander verriegelt (LOCKED). Es wird also das Ansteuern mindestens einer der lagegeregelten Achsen 1 der Werkzeugmaschine gesperrt, solange bestimmte andere der lagegeregelten Achsen 1 der Werkzeugmaschine verfahren werden. Anstelle einer vollständigen Verriegelung können auch dynamische Beschränkungen im Verfahrbereich realisiert werden.

Natürlich sind auch andere Bedingungen bzw. Betriebszustände möglich, unter denen ein Verfahren bestimmter Achsen 1 der Werkzeugmaschine gesperrt oder beschränkt werden kann.

Beim Verfahren des Werkzeugs 2 relativ zum Werkstück 3 können nicht nur dynamische, sondern auch statische Abweichungen δp der Positionierung p auftreten. Wenn das Werkzeug 2 relativ zum Werkstück 3 beispielsweise entsprechend der Darstellung in FIG 15 bei einer bestimmten Position p und/oder in einer bestimmten Orientierung o positioniert werden soll, so kann es geschehen, dass das Werkzeug 2 relativ zum Werkstück 3 tatsächlich bei einer tatsächlichen Position positioniert wird, die von der eigentlich gewünschten Position um die Abweichung δp abweicht. In analoger Weise ist es möglich, dass das Werkzeug 2 relativ zum Werkstück 3 tatsächlich in einer tatsächlichen Orientierung orientiert wird, die von der eigentlich gewünschten Orientierung um eine Abweichung δo abweicht. Der guten Ordnung halber sei erwähnt, dass im Zusammenhang mit FIG 15 die translatorische Position p und die rotatorische Orientierung o und auch die zugehörigen Abweichungen δp, δo Vektoren sein können. Beispielsweise kann die translatorische Position p für die drei Koordinaten eines kartesischen Koordinatensystems je einen eigenen Wert aufweisen. Ähnliches gilt für die rotatorische Orientierung o.

Für die Kompensation derartiger Abweichungen δp, δo sind verschiedene Maßnahmen bekannt. Beispielsweise ist allgemein bekannt, dass beispielsweise eine sogenannte Spindelsteigungsfehlerkompensation, eine Durchhangkompensation oder eine volumetrische Kompensation durchgeführt werden können. Die Kompensationsart kann prinzipiell frei gewählt werden. Sie kann oftmals auch im Teileprogramm 8 durch einen entsprechenden Befehlssatz 10 ausgewählt oder auch wieder abgeschaltet werden. Es ist jedoch möglich, dass innerhalb der numerischen Steuerung 4 bereits Kompensationsdaten für eine der genannten Kompensationsarten hinterlegt sind. In diesem Fall wäre es oftmals nicht nur sinnlos, sondern sogar kontraproduktiv, eine andere Kompensationsart auszuwählen. Es ist daher möglich, dass entsprechend der Darstellung in FIG 16 im Schritt S2 bestimmte Kompensationsarten gesperrt werden, so dass beispielsweise nur eine einzige verbleibende Kompensationsart ausgewählt werden kann oder eventuell sogar fest voreingestellt ist. In diesem Fall werden im Schritt S7 die Auswahl anderer Kompensationsarten und eventuell sogar ein Abschalten der verbleibenden Kompensationsart ignoriert. Diese Situation stellt beispielhaft einen Fall dar, in dem im Schritt S11 zwar der Befehlssatz 10 selbst nicht ausgeführt wird, sodann jedoch zum Schritt S6 zurückgegangen wird.

Wie weiterhin bereits erwähnt, ist die numerische Steuerung 4 als in der Regel solche universell einsetzbar, während die Werkzeugmaschine auf einer bestimmten Technologie basiert, beispielsweise auf "Fräsen" oder "Drehen". Es ist daher entsprechend der Darstellung in FIG 17 möglich, im Schritt S2 diejenigen Befehle zu sperren, welche nur für die nicht realisierte Technologie relevant sind. Es können also im Schritt S2 beispielsweise alle Befehle gesperrt werden, die nur für ein Drehen relevant sind, wenn die Werkzeugmaschine auf der Technologie "Fräsen" basiert. Beispiele derartiger Funktionen sind die Programmierung von Zyklen zum Plan- und Längsdrehen oder zum Gewindeschneiden. Derartige Funktionen können im Schritt S2 nach Bedarf einzeln freigegeben oder gesperrt werden. Gleiches gilt für Kombinationen von Funktionen.

Die genannten Möglichkeiten sind nur beispielhaft. Es sind auch andere Beschränkungen möglich. Beispielsweise kann im Schritt S2 auch festgelegt werden, ob der numerischen Steuerung 4 Positionen p in einem metrischen System oder in einem auf Zoll (= 2,54 cm) basierenden System vorgegeben werden. Zusammengefasst betrifft die vorliegende Erfindung somit folgenden Sachverhalt:
Eine numerische Steuerung 4 arbeitet ein Systemprogramm 5 ab. Unter Abarbeitung des Systemprogramms 5 arbeitet die numerische Steuerung 4 ein Teileprogramm 8 ab. Aufgrund der Abarbeitung des Teileprogramms 5 steuert sie lagegeregelte Achsen 1 einer von der numerischen Steuerung 4 gesteuerten Werkzeugmaschine an. Das Teileprogramm 8 weist Befehlssätze 10 auf, die von der numerischen Steuerung 4 sequenziell nacheinander aufgerufen werden. Die numerische Steuerung 4 arbeitet die aufgerufenen Befehlssätze 10 nur dann ab, wenn die Befehlssätze 10 zugelassene Randbedingungen einhalten. Anderenfalls arbeitet sie die Befehlssätze 10 nicht ab. Die numerische Steuerung 4 nimmt vor der Abarbeitung des Teileprogramms 8 unter Abarbeitung des Systemprogramms 5 über eine vor unbefugtem Zugriff geschützte Schnittstelle 9 Informationen I entgegen, welche die zugelassenen Randbedingungen festlegen. Die vorliegende Erfindung weist viele Vorteile auf. Insbesondere wird dem Hersteller der Werkzeugmaschine die Möglichkeit geboten, die numerische Steuerung 4 gemäß der von ihm konkret hergestellten Werkzeugmaschine "maßzuschneidern". Er kann individuell bestimmte Programmbefehle zulassen oder sperren, Wertebereiche für Variable oder Konfigurationsdaten einschränken und auch bestimmte Kombinationen von Funktionen zulassen oder sperren. Die Gefahr von Schäden durch Fehlbedienungen oder ein "unpassendes" Teileprogramm 8 wird vermieden bzw. zumindest reduziert.

## Patentansprüche

1. Betriebsverfahren für eine numerische Steuerung (4),
- wobei die numerische Steuerung (4) ein Systemprogramm (5) abarbeitet,
- wobei die numerische Steuerung (4) unter Abarbeitung des Systemprogramms (5) ein Teileprogramm (8) abarbeitet und aufgrund der Abarbeitung des Teileprogramms (5) lagegeregelte Achsen (1) einer von der numerischen Steuerung (4) gesteuerten Werkzeugmaschine ansteuert,
- wobei das Teileprogramm (8) Befehlssätze (10) aufweist, die von der numerischen Steuerung (4) sequenziell nacheinander aufgerufen werden,
- wobei die Befehlssätze (10) Funktionen umfassen, die speziell für die numerische Steuerung (4) vorhanden sind,
- wobei die numerische Steuerung (4) die aufgerufenen Funktionen nur dann abarbeitet, wenn die Funktionen zugelassene Randbedingungen einhalten, und anderenfalls die Funktionen nicht abarbeitet,
- wobei die numerische Steuerung (4) vor der Abarbeitung des Teileprogramms (8) unter Abarbeitung des Systemprogramms (5) über eine vor unbefugtem Zugriff geschützte Schnittstelle (9) Informationen (I) entgegennimmt, welche die zugelassenen Randbedingungen festlegen,
**dadurch gekennzeichnet,**
**dass** mittels mindestens einer der Randbedingungen für Kombinationen von Funktionen der numerischen Steuerung (4) festgelegt wird, ob sie freigegeben oder gesperrt sind.

2. Betriebsverfahren nach Anspruch 1,
**dadurch gekennzeichnet,**
**dass** mittels mindestens einer der Randbedingungen ein Wertebereich für eine Systemvariable (x*) der numerischen Steuerung (4) festgelegt wird und dass die numerische Steuerung (4) als Information (I) einen Minimalwert (min) und/oder einen Maximalwert (max) für die Systemvariable (x*) entgegennimmt.

3. Betriebsverfahren nach Anspruch 1 oder 2,
**dadurch gekennzeichnet,**
**dass** mittels mindestens einer der Randbedingungen ein Wertebereich für eine Korrektur von Abmessungen (D, H) eines Werkzeugs (2) der Werkzeugmaschine festgelegt wird und dass die numerische Steuerung (4) als Information (I) einen Minimalwert und/oder einen Maximalwert für die Korrektur (δD, δH) der Abmessungen (D, H) entgegennimmt.

4. Betriebsverfahren nach Anspruch 1, 2 oder 3,
**dadurch gekennzeichnet,**
**dass** mittels mindestens einer der Randbedingungen die Art und Weise festgelegt wird, auf welche beim Abfahren einer durch das Teileprogramm (8) festgelegten Bahn (11) eines Werkzeugs (2) relativ zu einem mittels des Werkzeugs (2) zu bearbeitenden Werkstück (3) Ecken (12) der Bahn (L) verschliffen werden, und dass die numerische Steuerung (4) als Information (I) entgegennimmt, auf welche Art und Weise die Ecken (12) verschliffen werden.

5. Betriebsverfahren nach einem der obigen Ansprüche,
**dadurch gekennzeichnet,**
**dass** mittels mindestens einer der Randbedingungen die Art und Weise festgelegt wird, auf welche aus einem CAD-Datensatz (13) das Teileprogramm (8) generiert wird und/oder das generierte Teileprogramm (8) verarbeitet wird, und dass die numerische Steuerung (4) als Information (I) entgegennimmt, auf welche Art und Weise das Teileprogramm (8) generiert und/oder verarbeitet wird.

6. Betriebsverfahren nach einem der obigen Ansprüche,
**dadurch gekennzeichnet,**
**dass** mittels der Befehlssätze (10) des Teileprogramms (8) sowohl die translatorische Position (p) als auch die rotatorische Orientierung (o) eines Werkzeugs (2) der Werkzeugmaschine relativ zu einem zu bearbeitenden Werkstück (3) festgelegt werden, dass mittels mindestens einer der Randbedingungen die Art und Weise festgelegt wird, wie bei einer kombinierten Änderung von translatorischer Position (p) und rotatorischer Orientierung (o) die Änderungen der translatorischen Position (p) und der rotatorischen Orientierung (o) aufeinander abgestimmt werden, und dass die numerische Steuerung (4) als Information (I) entgegennimmt, auf welche Art und Weise die Änderungen der translatorischen Position (p) und der rotatorischen Orientierung (o) aufeinander abgestimmt werden.

7. Betriebsverfahren nach einem der obigen Ansprüche,
**dadurch gekennzeichnet,**
**dass** mittels mindestens einer der Randbedingungen ein Ansteuern mindestens einer der lagegeregelten Achsen (1) der Werkzeugmaschine in Abhängigkeit vom Betriebszustand der Werkzeugmaschine dynamisch gesperrt oder beschränkt wird und dass die numerische Steuerung (4) als Information (I) entgegennimmt, bei welchen Betriebszuständen der Werkzeugmaschine das Ansteuern der mindestens einen der lagegeregelten Achsen (1) der Werkzeugmaschine gesperrt oder beschränkt wird.

8. Betriebsverfahren nach einem der obigen Ansprüche,
**dadurch gekennzeichnet,**
**dass** mittels mindestens einer der Randbedingungen festgelegt wird, auf welche Art und Weise eine Kompensation von Abweichungen (5p, δo) bei der Positionierung und/oder Orientierung eines Werkzeugs (2) der Werkzeugmaschine relativ zu einem zu bearbeitenden Werkstück (3) erfolgt, und dass die numerische Steuerung (4) als Information (I) die Art und Weise der Kompensation entgegennimmt.

9. Systemprogramm für eine numerische Steuerung (4), wobei das Systemprogramm Maschinencode (6) umfasst, der von der numerischen Steuerung (4) abarbeitbar ist, wobei die Abarbeitung des Maschinencodes (6) durch die numerische Steuerung (4) bewirkt, dass die numerische Steuerung (4) ein Betriebsverfahren nach einem der obigen Ansprüche ausführt.

10. Numerische Steuerung, wobei die numerische Steuerung mit einem Systemprogramm (5) nach Anspruch 9 programmiert ist, so dass die numerische Steuerung ein Betriebsverfahren nach einem der Ansprüche 1 bis 8 ausführt.

11. Werkzeugmaschine,
- wobei die Werkzeugmaschine mehrere lagegeregelte Achsen (1) aufweist, mittels derer ein Werkzeug (2) der Werkzeugmaschine relativ zu einem zu bearbeitenden Werkstück (3) verfahrbar ist,
- wobei die Werkzeugmaschine eine numerische Steuerung (4) nach Anspruch 10 aufweist, von der die lagegeregelten Achsen (1) angesteuert werden.

## Claims

1. Operating method for a numerical controller (4),
- wherein the numerical controller (4) executes a system program (5),
- wherein the numerical controller (4) executes a part program (8) while executing the system program (5) and on the basis of the execution of the part program (5) actuates position-controlled axes (1) of a machine tool that is controlled by the numerical controller (4),
- wherein the part program (8) has command sets (10) that are retrieved sequentially one after the other by the numerical controller (4),
- wherein the command sets (10) comprise functions that are especially available for the numerical controller (4),
- wherein the numerical controller (4) only then executes the retrieved functions if the functions comply with permitted boundary conditions, and otherwise it does not execute the functions,
- wherein prior to executing the part program (8) while executing the system program (5) the numerical controller (4) receives via an interface (9), which is protected from unauthorised access, information (I) that determines the permitted boundary conditions,
**characterised in that**
it is determined by means of at least one of the boundary conditions for combinations of functions of the numerical controller (4) whether they are released or blocked.

2. Operating method according to claim 1,
**characterised in that**
a value range for a system variable (x*) of the numerical controller (4) is determined by means of at least one of the boundary conditions and that the numerical controller (4) receives as information (I) a minimum value (min) and/or a maximum value (max) for the system variable (x*).

3. Operating method according to claim 1 or 2,
**characterised in that**
a value range for a correction of dimensions (D, H) of a tool (2) of the machine tool is determined by means of at least one of the boundary conditions and that the numerical controller (4) receives as information (I) a minimum value and/or a maximum value for the correction (δD, δH) of the dimensions (D, H).

4. Operating method according to claim 1, 2 or 3,
**characterised in that**
by means of at least one of the boundary conditions it is determined how corners (12) of the path (L) are ground away as a tool (2) moves along a path (11) relative to a workpiece (3) that is to be processed by means of the tool (2), said path being determined by the part program (8), and that the numerical controller (4) receives information (I) regarding how the corners are ground away.

5. Operating method according to one of the above claims,
**characterised in that**
by means of at least one of the boundary conditions it is determined how the part program (8) is generated from a CAD data set (13) and/or the generated part program (8) is executed and that the numerical controller (4) receives information (I) regarding how the part program (8) is generated and/or executed.

6. Operating method according to one of the above claims,
**characterised in that**
both the translational position (p) and also the rotational orientation (o) of a tool (2) of the machine tool relative to a workpiece (3) that is to be processed are determined by means of the command sets (10) of the part program (8), that by means of at least one of the boundary conditions it is determined how, in the case of a combined change of translational position (p) and rotational orientation (o), the changes of the translational position (p) and the rotational orientation (o) are coordinated with one another, and that the numerical controller (4) receives information (I) regarding how the changes of the translational position (p) and the rotational orientation (o) are coordinated with one another.

7. Operating method according to one of the above claims,
**characterised in that**
by means of at least one of the boundary conditions an actuation of at least one of the position-controlled axes (1) of the machine tool is dynamically blocked or restricted depending upon the operating state of the machine tool, and that the numerical controller (4) receives information (I) regarding in which operating states of the machine tool the actuation of the at least one of the position-controlled axes (1) of the machine tool is blocked or restricted.

8. Operating method according to one of the above claims,
**characterised in that**
how deviations (δp, δo) are compensated when positioning and/or orienting a tool (2) of the machine tool relative to a workpiece (3) that is to be processed is determined by means of at least one of the boundary conditions, and that the numerical controller (4) receives information (I) regarding the manner of compensation.

9. System program for a numerical controller (4), wherein the system program comprises machine code (6) that is executed by the numerical controller (4), wherein the execution of the machine code (6) by the numerical controller (4) causes the numerical controller (4) to perform an operating method according to one of the above claims.

10. Numerical controller, wherein the numerical controller is programmed with a system program (5) according to claim 9, with the result that the numerical controller performs an operating method according to one of claims 1 to 8.

11. Machine tool,
- wherein the machine tool has multiple position-controlled axes (1) by means of which a tool (2) of the machine tool can be moved relative to a workpiece (3) that is to be processed,
- wherein the machine tool has a numerical controller (4) according to claim 10, by means of which the position-controlled axes (1) are actuated.

## Revendications

1. Procédé pour faire fonctionner une commande (4) numérique,
- dans lequel la commande (4) numérique établit un programme (5) de système,
- dans lequel la commande (4) numérique établit, en établissant le programme (5) de système, un programme (8) partiel et commande, sur la base de l'établissement du programme (5) partiel, des axes (1) réglés en position d'une machine-outil commandée par la commande (4) numérique,
- dans lequel le programme (8) partiel a des ensembles (10) d'instruction, qui sont appelés les uns après les autres séquentiellement par la commande (4) numérique,
- dans lequel les ensembles (10) d'instruction comprennent des fonctions, qui sont présentes spécialement pour la commande (4) numérique,
- dans lequel la commande (4) numérique n'élabore les fonctions appelées que si les fonctions respectent des conditions aux limites autorisées, et sinon n'élaborent pas les fonctions,
- dans lequel la commande (4) numérique reçoit, avant l'élaboration du programme (8) partiel, en élaborant le programme (5) de système, par une interface (9) protégée d'un accès non autorisé, des informations (I), qui fixent les conditions aux limites autorisées,
**caractérisé**
**en ce que**, au moyen d'au moins l'une des conditions aux limites pour des combinaisons de fonctions de la commande (4) numérique, on fixe si elles sont validées ou bloquées.

2. Procédé suivant la revendication 1,
**caractérisé**
**en ce que**, au moyen d'au moins l'une des conditions aux limites, on fixe une plage de valeurs d'une variable (x*) de système de la commande (4) numérique et **en ce que** la commande (4) numérique reçoit, comme information (I), une valeur (min) minimum et/ou une valeur (max) maximum de la variable (x*) de système.

3. Procédé suivant la revendication 1 ou 2,
**caractérisé**
**en ce que**, au moyen d'au moins l'une des conditions aux limites, on fixe une plage de valeurs d'une correction de dimensions (D, H) d'un outil (2) de la machine-outil et **en ce que** la commande (4) numérique reçoit, comme information (I), une valeur minimum et/ou une valeur maximum de la correction (δD, δH) des dimensions (D, H) .

4. Procédé suivant la revendication 1, 2 ou 3,
**caractérisé**
**en ce que**, au moyen d'au moins l'une des conditions limites, on fixe la manière suivant laquelle, au départ d'une trajectoire (11), fixée par le programme (8) partiel, d'un outil (2) par rapport à une pièce (3) à usiner au moyen de l'outil (2), des coins (12) de la trajectoire (L) sont émoussés, et **en ce que** la commande (4) numérique reçoit, comme information (I), la manière dont les coins (12) sont émoussés.

5. Procédé suivant l'une des revendications précédentes, **caractérisé**
**en ce que**, au moyen d'au moins l'une des conditions limites, on fixe la manière dont on crée le programme (8) partiel à partir d'un ensemble (13) de données CAD et/ou dont on traite le programme (8) partiel créé, et **en ce que** la commande (4) numérique reçoit, comme information (I), la manière dont on crée et/ou traite le programme (8) partiel.

6. Procédé suivant l'une des revendications précédentes, **caractérisé**
**en ce que**, au moyen des ensembles (10) d'instruction du programme (8) partiel, on fixe à la fois la position (p) en translation et l'orientation (o) en rotation d'un outil (2) de la machine-outil par rapport à une pièce (3) à usiner, **en ce que**, au moyen d'au moins l'une des conditions aux limites, qui fixent la manière dont, lors d'une modification combinée de la position (p) de position en translation et de l'orientation (o) en rotation, on adapte l'une à l'autre les variations de la position (p) en translation et l'orientation (o) en rotation, et ce que la commande (4) numérique reçoit, comme information (I), la manière dont les variations de la position (p) en translation et d'orientation (o) en rotation sont adaptées l'une à l'autre.

7. Procédé suivant l'une des revendications précédentes, **caractérisé**
**en ce que**, au moyen d'au moins l'une des conditions aux limites, on bloque dynamiquement ou on limite une commande d'au moins l'un des axes (1) réglés en position de la machine-outil, en fonction de l'état de fonctionnement de la machine-outil, et **en ce que** la commande (4) numérique reçoit, comme information (I), les états de fonctionnement de la machine-outil pour lesquels on a bloqué ou limité la commande d'au moins l'un des axes (1) réglés en position de la machine-outil.

8. Procédé suivant l'une des revendications précédentes, **caractérisé**
**en ce que**, au moyen d'au moins l'une des conditions aux limites, on fixe la manière dont s'effectue une compensation d'écart (δp, δo), lors de la mise en position et/ou d'orientation d'un outil (2) de la machine-outil par rapport à une pièce (3) à usiner, et **en ce que** la commande (4) numérique reçoit, comme information (I), la manière dont s'effectue la compensation.

9. Programme de système pour une commande (4) numérique,
dans lequel le programme de système comprend un code (6) de machine, qui peut être établi par la commande (4) numérique, dans lequel l'établissement du code (6) de machine, par la commande (4) numérique, fait que la commande (4) numérique exécute un procédé suivant l'une des revendications précédentes.

10. Commande numérique, dans laquelle la commande numérique est programmée par un programme (5) de système suivant la revendication 9, de sorte que la commande numérique exécute un procédé suivant l'une des revendications 1 à 8.

11. Machine-outil,
- dans laquelle la machine-outil a plusieurs axes (1) réglés en position, au moyen desquels un outil (2) de la machine-outil peut être déplacé par rapport à une pièce (3) à usiner,
- dans laquelle la machine-outil a une commande (4) numérique suivant la revendication 10, par laquelle les axes (1) réglés en position sont commandés.
